# EUROPÄISCHE PATENTSCHRIFT

(11) **EP 1 255 897 B1**
(45) Veröffentlichungstag und Bekanntmachung des Hinweises auf die Patenterteilung: **29.09.2004**
(21) Anmeldenummer: 01916886.3
(22) Anmeldetag: 05.02.2001
(51) Int. Cl.: E04B 1/66

(54) **ABDICHTUNGSBAHN FÜR BAUWERKE**
SEALING WEB FOR CONSTRUCTIONS
BANDE D'ETANCHEITE POUR BATIMENTS

(30) Priorität: 07.02.2000 DE 10004948; 27.04.2000 DE 10020543
(43) Veröffentlichungstag der Anmeldung: 13.11.2002
(73) Patentinhaber: CWW-GERKO Akustik GmbH & Co. KG, 67547 Worms (DE); BTF-Produktentwicklungs- u. Vertriebsentwicklungs GmbH, 95445 Bayreuth (DE)
(72) Erfinder: SIMONIS, Udo, 63549 Ronneburg (DE); TURTENWALD, Franz, 95445 Bayreuth (DE)
(74) Vertreter: Hebing, Norbert
(86) Internationale Anmeldenummer: PCT/DE2001/000456
(87) Internationale Veröffentlichungsnummer: WO 2001/057331

(56) Entgegenhaltungen:
- EP-A- 0 313 735
- EP-A- 0 582 043
- DE-U- 29 915 658
- US-A- 4 948 655

## Beschreibung

Die Erfindung betrifft eine Abdichtungsbahn für Bauwerke, beispielsweise für den Keller eines Wohnhauses, welche eine mittlere Schicht hat, die auf beiden Seiten mit einer kaltselbstklebenden Klebstoffschicht versehen ist und bei der die eine Klebstoffschicht mit einer abziehbaren Trennfolie und die andere Klebstoffschicht mit einer Schutzschicht abgedeckt ist.

Eine Abdichtbahn der vorstehenden Art ist Gegenstand der DE 299 15 658 U1. Bei der bekannten Abdichtbahn ist die mittlere Schicht als Trägereinlage ausgebildet und hat die Aufgabe, die Klebstoffschichten zu armieren. Die Trägereinlage ist nicht dichtend ausgebildet. Die Dichtwirkung entsteht durch die Klebstoffschichten. Die außenseitig aufgebrachte Schutzschicht hat lediglich die Funktion, die Abdichtbahn rollbar zu machen.

zum Abdichten von Bauwerken klebt man üblicherweise einseitig kaltselbstklebende Polyethylen-Dichtfolien gegen die abzudichtende Fläche. Wenn es sich bei der Fläche um eine Kellerwand handelt, dann muss man anschließend oftmals gegen die Polyethylen-Dichtfolie Drainage- oder Wärmeisolationsplatten kleben. Häufig werden hier Schaumstoffplatten aus extrudiertem Polystyrol (XPS) verwendet. Zur Befestigung solcher Platten hat man bisher auf die gegen die Kellerwand geklebte Polyethylen-Dichtfolie Bitumenkleber aufgebracht und dann die Polystyrol-Platten aufgeklebt. Solche Schaumstoffplatten oder andere Materialien zum mechanischen Schutz sind selbst dann erforderlich, wenn es auf eine Wärmeisolation nicht ankommt, damit beim Auffüllen des Geländes spitze Steine die Polyethylen-Dichtfolie nicht beschädigen können.

Kommt es auf eine Wärmeisolation nicht an, dann stellt die Anbringung von Schaumstoffplatten einen unerwünschten Kostenfaktor dar. Sind Schaumstoffplatten zur Wärmeisolation notwendig, dann bedingt das Aufbringen von Klebstoffen auf die Polyethylen-Dichtfolie unerwünschten Arbeitsaufwand.

Der Erfindung liegt das Problem zugrunde, eine Abdichtungsbahn für Bauwerke zu entwickeln, welche wahlweise mit oder ohne außenseitig aufgeklebten Schaumstoffplatten ohne Gefahr einer Beschädigung der Dichtfolie verwendet werden kann und bei der das Aufbringen von Schaumstoffplatten möglichst geringen Arbeitsaufwand bedingt.

Dieses Problem wird erfindungsgemäß dadurch gelöst, dass die mittlere Schicht als Dichtfolie ausgebildet und die Schutzschicht abziehbar auf der Klebstoffschicht gehalten ist.

Durch diese Gestaltung kann die erfindungsgemäße Abdichtungsbahn auch dann ohne eine zusätzliche Schutzschicht aus Schaumstoff zur Bauwerksabdichtung eingesetzt werden, wenn die Gefahr besteht, dass die Dichtfolie der Einwirkung von Steinen oder anderen scharfkantigen Gegenständen ausgesetzt ist, weil die Schutzschicht ausreichend fest und dick sein kann, um ein Durchdringen solcher Gegenstände und dadurch eine Beschädigung der Dichtfolie zu vermeiden. Wenn die erfindungsgemäße Abdichtungsbahn außenseitig mit Schaumstoffplatten versehen werden soll, dann wird die Schutzschicht als Trennfolie benutzt, die man lediglich genau wie zuvor die Trennfolie auf der Seite der Kellerwand abzuziehen hat, so dass die Klebstoffschicht freiliegt und die Schaumstoffplatten lediglich gegen diese gedrückt werden müssen. Der bisher erforderliche Arbeitsgang des Aufbringens von Klebstoff auf die Dichtfolie entfällt deshalb.

Besonders kostengünstig und für die Doppelfunktion als Schutzschicht und Trennfolie geeignet ist die Schutzschicht, wenn gemäß einer vorteilhaften Weiterbildung der Erfindung die abziehbare Schutzschicht eine 200 bis 600 µm dicke Kunststoff-Folie ist.

Alternativ ist es jedoch auch möglich, dass die Schutzschicht ein Vlies aus Kunststofffasern ist.

Die Klebstoffschichten sind kostengünstig herzustellen und ermöglichen eine kaltselbstklebende Folie, wenn sie durch jeweils eine Bitumenschicht gebildet sind.

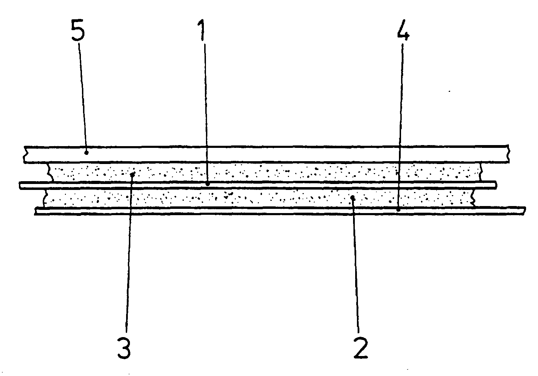

Die Erfindung lässt verschiedene Ausführungsformen zu. Zur weiteren Verdeutlichung ihres Grundprinzips ist eine davon schematisch in der Zeichnung dargestellt und wird nachfolgend beschrieben.

Die Zeichnung zeigt im Querschnitt eine Abdichtungsbahn, welche eine Dichtfolie 1 von beispielsweise 100 µm Dicke aus beispielsweise Polyethylen hat. Auf diese Dichtfolie 1 ist zu beiden Seiten eine kaltselbstklebende Klebstoffschicht 2, 3 auf Basis Bitumen SBS und SBS-Kautschuk aufgebracht. Auf der unteren Klebstoffschicht 2 liegt eine übliche Trennfolie 4 auf, welche vor dem Aufkleben der Abdichtungsbahn abgezogen wird, so dass die Klebstoffschicht 2 freiliegt.

Auf der oberen Klebstoffschicht 3 ist eine silikonisierte und deshalb ebenfalls abziehbare Schutzschicht 5 aufgebracht, bei der es sich um eine 200 bis 600 µm dicke Polyethylenfolie handeln kann. Sollen außenseitig auf die Abdichtungsbahn Schaumstoffplatten aufgebracht werden, um ein Gebäude thermisch zu isolieren, dann zieht man zuvor die Schutzschicht 5 von der Klebstoffschicht 3 ab, so dass die Klebstoffschicht 3 zum Verkleben der Schaumstoffplatten zur Verfügung steht. Kann auf solche Schaumstoffplatten verzichtet werden, dann dient die Schutzschicht 5 dazu, die Dichtfolie 1 vor mechanischen Beschädigungen zu schützen.

## Patentansprüche

1. Abdichtungsbahn für Bauwerke, beispielsweise für den Keller eines Wohnhauses, welche eine mittlere Schicht (1) hat, die auf beiden Seiten mit einer kaltselbstklebenden Klebstoffschicht (2, 3) versehen ist und bei der die eine Klebstoffschicht (2) mit einer abziehbaren Trennfolie (4) und die andere Klebstoffschicht (3) mit einer Schutzschicht (5) abgedeckt ist, **dadurch gekennzeichnet, dass** die mittlere Schicht (1) als Dichtfolie ausgebildet und die Schutzschicht (5) abziehbar auf der Klebstoffschicht (3) gehalten ist.

2. Abdichtungsbahn nach Anspruch 1, **dadurch gekennzeichnet, dass** die abziehbare Schutzschicht (5) eine 200 bis 600 µm dicke Kunststoff-Folie ist.

3. Abdichtungsbahn nach Anspruch 1, **dadurch gekennzeichnet, dass** die Schutzschicht (5) ein Vlies aus Kunststofffasern ist.

4. Abdichtungsbahn nach zumindest einem der vorangehenden Ansprüche, **dadurch gekennzeichnet, dass** die Klebstoffschichten (2, 3) durch jeweils eine Bitumenschicht gebildet sind.

## Claims

1. A sealing web for constructions, for example for the basement of a residential building, which has a middle layer (1), provided on both sides with a cold self-adhesive layer (2, 3) and in which one adhesive layer (2) is covered with a peel-off separating layer (4) and the other adhesive layer (3) is covered with a protective layer (5), **characterised in that** the middle layer (1) is designed as a sealing film and the protective layer (5) is held onto and can be peeled off from the adhesive layer (3).

2. The sealing web as claimed in Claim 1, **characterised in that** the peel-off protective layer (5) is a 200 to 600 µm thick plastic film.

3. The sealing web as claimed in Claim 1, **characterised in that** the protective layer (5) is a fleece made of synthetic fibres.

4. The sealing web as claimed in at least one of the preceding claims, **characterised in that** the adhesive layers (2, 3) are in each case formed by a bitumen layer.

## Revendications

1. Bande d'étanchéité pour bâtiments, par exemple pour la cave d'un immeuble, laquelle comporte une couche médiane (1), qui est pourvue sur ses deux côtés d'une couche d'adhésif (2,3) autocollant à froid et dont une des couches d'adhésif (2) est recouverte d'une feuille de séparation (4) décollable et l'autre couche d'adhésif (3) est recouverte d'une couche de protection (5), **caractérisée en ce que** la couche médiane (1) est réalisée sous la forme d'une toile à étancher et la couche de protection (5) est maintenue sur la couche d'adhésif (3) de manière à pouvoir être décollée.

2. Bande d'étanchéité selon la revendication 1, **caractérisée en ce que** la couche de protection (5) décollable est une feuille de plastique épaisse de 200 à 600µm.

3. Bande d'étanchéité selon la revendication 1, **caractérisée en ce que** la couche de protection (5) est un tissu non-tissé de fibres de plastique.

4. Bande d'étanchéité selon au moins une des revendications précédentes, **caractérisée en ce que** les couches d'adhésif (2,3) sont formées respectivement à travers une couche de bitume.
